# EUROPÄISCHE PATENTSCHRIFT

(11) **EP 2 157 324 B1**
(45) Veröffentlichungstag und Bekanntmachung des Hinweises auf die Patenterteilung: **13.06.2018**
(21) Anmeldenummer: 09166460.7
(22) Anmeldetag: 27.07.2009
(51) Int. Cl.: F16B 35/04, F16B 43/00, F16B 25/00, F16B 41/00

(54) **Schraube mit Dichtscheibenanordnung**
Screw with sealing disc assembly
Vis dotée d'un agencement de disques d'étanchéité

(30) Priorität: 21.08.2008 DE 102008041411
(43) Veröffentlichungstag der Anmeldung: 24.02.2010
(73) Patentinhaber: HILTI Aktiengesellschaft, 9494 Schaan (LI)
(72) Erfinder: Baumgartner, Michael, 9462, Montlingen (CH); Kieber, Markus, 9486, Schaanwald (LI); Matthiesen, Sven, 88131, Lindau (DE); Meboldt, Mirko, 9400 Rohrschach (CH)
(74) Vertreter: Hilti Aktiengesellschaft Corporate Intellectual Property

(56) Entgegenhaltungen:
- CA-A- 1 171 701
- DE-U1- 29 811 036
- US-A- 2 761 347
- US-A- 3 500 712
- US-A1- 2003 178 333

## Beschreibung

Die vorliegende Erfindung betrifft eine Schraube mit Dichtscheibenanordnung der im Oberbegriff von Patentanspruch 1 genannten Art. Derartige Schrauben sind z. B. als gewindeformende Schrauben oder als Selbstbohrschrauben ausgebildet und werden z. B. zur Verschraubung von Metallblechen genutzt, wobei über die Dichtscheibenanordnung die Dichtigkeit der Verschraubung gegen Flüssigkeitszutritt gewährleistet ist. Aus der US2003/0178333 ist ein Magazin nach dem Oberbegriff des Anspruchs 1 bekannt. Aus der US 3 500 712 ist eine Schraube nach dem Oberbegriff des Anspruchs 6 mit einem Kopf mit umfänglicher Sechskantgeometrie als Drehmitnahmemittel und einem sich daran anschliessenden Schaft bekannt, bei der umfänglich am Schaft ein Gewinde angeordnet ist. An dem, dem Kopf zugewandten Ende des Schafts weist dieser eine gewindefreie Zone auf, auf der eine Scheibenanordnung aufgezogen ist. Die Scheibenanordnung besteht dabei aus einem Dichtring, der aus einem elastischen Material besteht, und aus einem relativ starren Ring, z. B. aus Metall. Die Scheibenanordnung liegt nahe bis direkt an der Unterseite des Kopfes der Schraube an.
Von Nachteil bei dieser Schraube ist, dass sie für eine Magazinierung an einem Magazin, das z. B. einen Aufnahmekanal für Schraubenköpfe aufweist, nicht geeignet ist.
Die Aufgabe der vorliegenden Erfindung liegt darin, die oben genannten Nachteile zu vermeiden und eine Schraube bereitzustellen, die leicht magazinierbar ist.

Diese Aufgabe wird erfindungsgemäss durch die in den Patentansprüchen 1 und 6 genannten Massnahmen gelöst. Nach Anspruch 1 ist die Dichtscheibenanordnung entlang der Schraubenachse in einem Abstand von einer dem Schaft zugewandten Unterseite des Kopfes beabstandet, wobei der Abstand grösser als die Wanddicke ist. Hierdurch ist die Schraube leicht magazinierbar an einem länglichen Magazin mit Aufnahmekanal und einer Wandstärke, die mit einer maximalen Abweichung von +/- 20 % der Dicke der Versteifungsscheibe entspricht. Die Magazinwände im Bereich der Öffnung des Magazins greifen dabei in den Freiraum zwischen Kopf und Dichtscheibenanordnung der Schraube, um diese am Magazin zu halten.

Vorteilhaft weist der Schaft an seinem dem Kopf zugewandten Ende einen zylindrischen Bund auf, auf dessen dem Kopf abgewandten Ende die Versteifungsscheibe aufgezogen ist und dessen Länge entlang der Schraubenachse dem Abstand zuzüglich der Dicke der Versteifungsscheibe entspricht. Hierdurch wird der Abstand zwischen der Unterseite des Kopfs und der Dichtscheibenanordnung über den Bund definiert und so eine einfache Fertigungsmontage der Schraube mit Dichtscheibenanordnung erreicht. Ausserdem, weist das Vorsehen eine Bunds fertigungstechnische Vorteile auf.

Von Vorteil ist es ferner, wenn der Schaft im Bereich des Bunds einen ersten Durchmesser aufweist, der grösser ist als ein zweiter Durchmesser des Schafts im Bereich des Gewindes. Hierdurch kann der Bund als Anschlag beim Einschrauben der Schraube in einen Untergrund genutzt werden, der ein Beschädigen oder Auspressen der Dichtscheibe beim Einschrauben der Schraube in ein Werkstück verhindert.

In den Zeichnungen ist die Erfindung in einem Ausführungsbeispiel dargestellt. Es zeigen:
- Fig. 1: Eine erfindungsgemässe Schraube mit Dichtscheibenanordnung in Seitenansicht,
- Fig. 2: die erfindungsgemässe Schraube mit Dichtscheibenanordnung aus Fig. 1 an einem Magazinstreifen,
- Fig. 3: die erfindungsgemässe Schraube mit Dichtscheibenanordnung in, in ein Werkstück eingeschraubten Zustand.

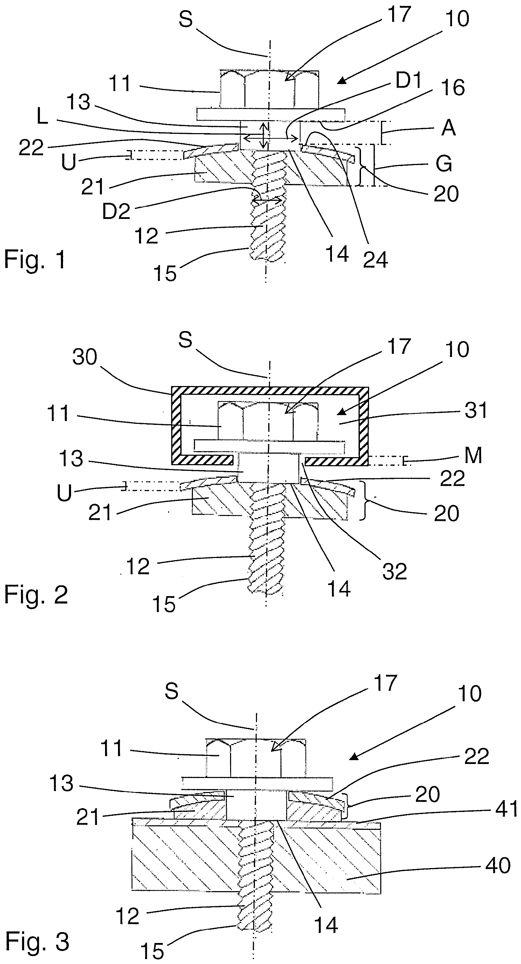

Die in den Figuren 1 und 2 dargestellte erfindungsgemässe Schraube 10 mit Dichtscheibenanordnung 20 weist einen bereichsweise ein Gewinde 15 tragenden Schaft 12 auf, an dessen einem Ende eine Spitze (in den Figuren nicht wiedergegeben) und an dessen gegenüberliegenden anderen Ende ein Kopf 11 angeordnet ist. Die Spitze kann dabei z. B. als Bohrerspitze oder auch als Punktspitze ausgebildet sein. Die Schraubenachse S definiert dabei eine axiale Richtung der Schraube 10. Der Kopf 11 weist ein Drehmitnahmemittel 17 für ein Schraubwerkzeug auf, der als Aussen-Mehrkant und insbesondere als Aussen-Sechskant ausgebildet ist an den ein Schraubenschlüssel angesetzt werden kann.

An dem, dem Kopf 11 zugewandten Ende des Schafts 12 ist ein zylindrischer Bund 13 an diesem angeordnet. Der Bund 13 weist an seinem dem Kopf 11 abgewandten axialen Ende eine Anschlagfläche 14 auf. Der Schaft 12 weist im Bereich des Bunds 13 einen ersten Durchmesser D1 auf, der grösser ist als ein zweiter Durchmesser D2 des Schafts 12 im Bereich des Gewindes 15 (siehe insbesondere Fig. 1).

Die Dichtscheibenanordnung 20 besteht aus einer Dichtscheibe 21 und einer an dieser anliegenden Versteifungsscheibe 22 aus einem steifen Material, wie z. B. einem Metall, insbesondere Stahl. Die Versteifungsscheibe 22 weist dabei eine Dicke U und die Dichtscheibenanordnung 20 eine kumulative Dicke G auf (siehe insbesondere Fig. 1). Entlang der Schraubenachse S ist die Dichtscheibenanordnung 20 mit einer dem Kopf zugewandten Oberseite 24 der Versteifungsscheibe 22 in einem Abstand A von einer dem Schaft 12 zugewandten Unterseite 16 des Kopfes 11 beabstandet. Der Abstand A ist dabei grösser als die Dicke U der Versteifungsscheibe 22 und kleiner als die kumulative Dicke G der Dichtscheibenanordnung 20 (siehe insbesondere Fig. 1). Die Versteifungsscheibe 22 ist im Ausgangszustand der Schraube 10 an dem, dem Kopf 11 abgewandten Ende des Bunds 13 Versteifungsscheibe 22 aufgezogen, während die Dichtscheibe 21 an dem Anschlag 14 am Bund 13 anliegt. Der zweite Durchmesser D2 des Schafts 12 im Bereich des Bunds 13 ist dazu etwas kleiner als der Durchmesser der Öffnung der Versteifungsscheibe 22. Eine Länge L des Bunds 13 entlang der Schraubenachse S entspricht dabei dem Abstand A zuzüglich der Dicke U der Versteifungsscheibe 22.

In Figur 2 ist die Schraube 10 an einem Magazin 30 angeordnet, das einen Aufnahmekanal 31 für die Köpfe 11 mehrerer Schrauben 10 und einen Öffnungsschlitz 32 für die Schäfte 12 der Schrauben 10 aufweist. Das Magazin 30 weist zumindest benachbart zum Öffnungsschlitz 32 eine Wandstärke M auf, die kleiner ist als der Abstand A zwischen der Unterseite 16 des Kopfes 11 und der Dichtscheibenanordnung 20 ist. Die Wandstärke M entspricht dabei vorzugsweise der Dicke U der Versteifungsscheibe 22 mit einer maximalen Abweichung von +/- 20%. Durch den Abstand A zwischen der Dichtscheibenanordnung 20 und der dem Schaft 12 zugewandten Unterseite 16 des Kopfes 11 ist die Schraube 10 an dem Magazin 30 leicht beweglich geführt und kann auch bei einer leichten Schräglage der Schraubenachse S zur Längsachse des Magazins 30 noch im Aufnahmekanal 31 bewegt werden.

In Figur 3 ist die Schraube 10 in ein Werkstück 40 eingeschraubt worden, wobei ein flächiges Teil 41, wie z. B. ein Blech, an dem Werkstück festgelegt worden ist. Beim Einschraubvorgang der Schraube 10 in das Werkstück 40 wurde der Abstand A zwischen der Unterseite 16 des Kopfs 11 und der Dichtscheibenanordnung 20 auf Null reduziert und die Dichtscheibenanordnung 20 vollständig auf den Bund 13 aufgezogen. Die Dichtscheibe 21 liegt nun dichtend an dem flächigen Teil 41 an.

## Patentansprüche

1. Magazin, insbesondere für ein Befestigungs- oder Einschraubgerät, aufweisend einen Aufnahmekanal mit einer eine Wanddicke (M) aufweisenden Wand und zumindest ein in dem Aufnahmekanal aufgenommenes Befestigungselement, insbesondere Schraube (10), mit einer Dichtscheibenanordnung (20), mit einem eine Schraubenachse (S) definierenden Schaft (12), der insbesondere zumindest bereichsweise ein Gewinde (15) trägt und an dessen einem Ende ein Kopf (11) angeordnet ist, wobei die Dichtscheibenanordnung (20) auf dem Schaft (12) sitzt und wenigstens eine Dichtscheibe (21) und eine Versteifungsscheibe (22) aufweist und wobei die Versteifungsscheibe (22) eine Dicke (U) und die Dichtscheibenanordnung (20) eine kumulative Dicke (G) aufweist,
**dadurch gekennzeichnet,**
**dass** die Dichtscheibenanordnung (20) entlang der Schraubenachse (S) in einem Abstand (A) von einer dem Schaft (12) zugewandten Unterseite (16) des Kopfes (11) beabstandet ist, wobei der Abstand (A) grösser als die Wanddicke (M) ist.

2. Magazin nach Anspruch 1, **dadurch gekennzeichnet, dass** der Abstand (A) grösser als die Dicke (U) der Versteifungsscheibe (22) ist.

3. Magazin nach einem der vorhergehenden Ansprüche, **dadurch gekennzeichnet, dass** der Abstand (A) kleiner als die kumulative Dicke (G) der Dichtscheibenanordnung (20) ist.

4. Magazin nach einem der vorhergehenden Ansprüche, **dadurch gekennzeichnet, dass** der Schaft (12) an seinem dem Kopf (11) zugewandten Ende einen zylindrischen Bund (13) aufweist, auf dessen dem Kopf (11) abgewandten Ende die Versteifungsscheibe (22) aufgezogen ist und dessen Länge (L) entlang der Schraubenachse (S) dem Abstand (A) zuzüglich der Dicke (U) der Versteifungsscheibe (22) entspricht.

5. Magazin nach Anspruch 4, **dadurch gekennzeichnet, dass** der Schaft (12) im Bereich des Bunds (13) einen ersten Durchmesser (D1) aufweist, der grösser ist als ein zweiter Durchmesser (D2) des Schafts (12) im Bereich des Gewindes (15).

6. Schraube (10) mit einer Dichtscheibenanordnung (20), mit einem eine Schraubenachse (S) definierenden Schaft (12), der zumindest bereichsweise ein Gewinde (15) trägt und an dessen einem Ende ein Kopf (11) angeordnet ist, wobei die Dichtscheibenanordnung (20) auf dem Schaft (12) sitzt und wenigstens eine Dichtscheibe (21) und eine Versteifungsscheibe (22) aufweist und wobei die Versteifungsscheibe (22) eine Dicke (U) und die Dichtscheibenanordnung (20) eine kumulative Dicke (G) aufweist,
**dadurch gekennzeichnet,**
**dass** die Dichtscheibenanordnung (20) entlang der Schraubenachse (S) in einem Abstand (A) von einer dem Schaft (12) zugewandten Unterseite (16) des Kopfes (11) beabstandet ist, wobei der Abstand (A) grösser als die Dicke (U) der Versteifungsscheibe (22) ist.

7. Schraube nach Anspruch 6, **dadurch gekennzeichnet, dass** der Schaft (12) an seinem dem Kopf (11) zugewandten Ende einen zylindrischen Bund (13) aufweist, auf dessen dem Kopf (11) abgewandten Ende die Versteifungsscheibe (22) aufgezogen ist und dessen Länge (L) entlang der Schraubenachse (S) dem Abstand (A) zuzüglich der Dicke (U) der Versteifungsscheibe (22) entspricht.

8. Schraube nach Anspruch 7, **dadurch gekennzeichnet, dass** der Schaft (12) im Bereich des Bunds (13) einen ersten Durchmesser (D1) aufweist, der grösser ist als ein zweiter Durchmesser (D2) des Schafts (12) im Bereich des Gewindes (15).

## Claims

1. Magazine, in particular for a fastening or driving device, comprising a receiving channel having a wall having a thickness (M) and at least one fastening element, in particular a screw (10), received in the receiving channel, the fastening element having a sealing washer arrangement (20) and a shank (12) defining a screw axis (S), the shank, in particular, being provided with a thread (15) at least in some areas and a head (11) being arranged at one end thereof, wherein the sealing washer arrangement (20) sits on the shank (12) and has at least one sealing washer (21) and a reinforcing washer (22) and wherein the reinforcing washer (22) has a thickness (U) and the sealing washer arrangement (20) has a cumulative thickness (G), **characterised in that** the sealing washer arrangement (20) is disposed along the screw axis (S) at a distance (A) from the underside (16) of the head (11) directed towards the shank (12), the distance (A) being greater than the wall thickness (M).

2. Magazine according to claim 1, **characterised in that** the distance (A) is greater than the thickness (U) of the reinforcing washer (22).

3. Magazine according to one of the preceding claims, **characterised in that** the distance (A) is smaller than the cumulative thickness (G) of the sealing washer arrangement (20).

4. Magazine according to one of the preceding claims, **characterised in that** the shank (12) is provided at its end directed towards the head (11) with a cylindrical collar (13) on the end of which directed away from the head (11) the reinforcing washer (22) is mounted and the length (L) of which along the screw axis (S) corresponds to the distance (A) plus the thickness (U) of the reinforcing washer (22).

5. Magazine according to claim 4, **characterised in that** the shank (12) has a first diameter (D1) in the region of the collar (13) that is greater than a second diameter (D2) of the shank (12) in the region of the thread (15).

6. Screw (10) having a sealing washer arrangement (20) and a shank (12) defining a screw axis (S), the shank being provided with a thread (15) at least in some areas and a head (11) being arranged at one end thereof, wherein the sealing washer arrangement (20) sits on the shank (12) and has at least one sealing washer (21) and a reinforcing washer (22) and wherein the reinforcing washer (22) has a thickness (U) and the sealing washer arrangement (20) has a cumulative thickness (G), **characterised in that** the sealing washer arrangement (20) is disposed along the screw axis (S) at a distance (A) from the underside (16) of the head (11) directed towards the shank (12), the distance (A) being greater than the thickness (U) of the reinforcing washer (22).

7. Screw according to claim 6, **characterised in that** the shank (12) is provided at its end directed towards the head (11) with a cylindrical collar (13) on the end of which directed away from the head (11) the reinforcing washer (22) is mounted and the length (L) of which along the screw axis (S) corresponds to the distance (A) plus the thickness (U) of the reinforcing washer (22).

8. Screw according to claim 7, **characterised in that** the shank (12) has a first diameter (D1) in the region of the collar (13) that is greater than a second diameter (D2) of the shank (12) in the region of the thread (15).

## Revendications

1. Magasin, en particulier pour un appareil de fixation ou de vissage, comportant un canal de réception ayant une paroi avec une épaisseur de paroi (M) et au moins un élément de fixation reçu dans le canal de réception, en particulier une vis (10), comportant un agencement de rondelles d'étanchéité (20), une tige (12) définissant un axe de vis (S) portant en particulier un filetage (15) au moins dans certaines zones et sur une extrémité de laquelle est agencée une tête (11), dans lequel l'agencement de rondelles d'étanchéité (20) est en appui sur la tige (12) et comporte au moins une rondelle d'étanchéité (21) et une rondelle de renfort (22) et dans lequel la rondelle de renfort (22) a une épaisseur (U) et l'agencement de rondelles d'étanchéité (20) a une épaisseur cumulée (G),
**caractérisé en ce que**
l'agencement de rondelles d'étanchéité (20) le long de l'axe de vis (S) est espacé d'une distance (A) par rapport à un côté inférieur (16) de la tête (11) dirigé vers la tige (12), dans lequel la distance (A) est supérieure à l'épaisseur de paroi (M).

2. Magasin selon la revendication 1, **caractérisé en ce que** la distance (A) est supérieure à l'épaisseur (U) de la rondelle de renfort (22).

3. Magasin selon l'une des revendications précédentes, **caractérisé en ce que** la distance (A) est inférieure à l'épaisseur cumulée (G) de l'agencement de rondelles d'étanchéité (20).

4. Magasin selon l'une des revendications précédentes, **caractérisé en ce que** l'extrémité de la tige (12) dirigée vers la tête (11) comporte une collerette cylindrique (13) sur l'extrémité opposée à la tête (11) de laquelle est montée la rondelle de renfort (22) et dont la longueur (L) le long de l'axe de vis (S) correspond à la distance (A) plus l'épaisseur (U) de la rondelle de renfort (22).

5. Magasin selon la revendication 4, **caractérisé en ce que** la tige (12), dans la zone de la collerette (13), a premier diamètre (D1) qui est supérieur à un second diamètre (D2) de la tige (12) dans la zone du filetage (15).

6. Vis (10) ayant un agencement de rondelles d'étanchéité (20), comportant une tige (12) définissant un axe de vis (S) portant un filetage (15) au moins dans certaines zones et sur une extrémité de laquelle est agencée une tête (11), dans laquelle l'agencement de rondelles d'étanchéité (20) est en appui sur la tige (12) et comporte au moins une rondelle d'étanchéité (21) et une rondelle de renfort (22), et dans laquelle la rondelle de renfort (22) a une épaisseur (U) et l'agencement de rondelles d'étanchéité (20) a une épaisseur cumulée (G),
**caractérisée en ce que**
l'agencement de rondelles d'étanchéité (20) le long de l'axe de vis (S) est espacé d'une distance (A) par rapport à un côté inférieur (16) de la tête (11) dirigé vers la tige (12), dans laquelle la distance (A) est supérieure à l'épaisseur (U) de la rondelle de renfort (22) .

7. Vis selon la revendication 6, **caractérisée en ce que** la tige (12) comporte, à son extrémité dirigée vers la tête (11), une collerette cylindrique (13) sur l'extrémité opposée à la tête (11) de laquelle est montée la rondelle de renfort (22) et dont la longueur (L) le long de l'axe de vis (S) correspond à la distance (A) plus l'épaisseur (U) de la rondelle de renfort (22).

8. Vis selon la revendication 7, **caractérisée en ce que** la tige (12) dans la zone de la collerette (13) a un premier diamètre (D1) qui est supérieur à un second diamètre (D2) de la tige (12) dans la zone du filetage (15) .
